(19) Europäisches Patentamt
European Patent Office
Office européen des brevets

(11) **EP 3 229 424 A1**

(12) **EUROPEAN PATENT APPLICATION**
published in accordance with Art. 153(4) EPC

(43) Date of publication:
**11.10.2017 Bulletin 2017/41**

(21) Application number: **15864573.9**

(22) Date of filing: **23.03.2015**

(51) Int Cl.:
**H04L 12/823** (2013.01)  **H04L 12/863** (2013.01)

(86) International application number:
**PCT/CN2015/074835**

(87) International publication number:
**WO 2016/086551 (09.06.2016 Gazette 2016/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **03.12.2014 CN 201410723738**

(71) Applicant: **Sanechips Technology Co., Ltd.**
**Nanshan District**
**Shenzhen,**
**Guangdong 518055 (CN)**

(72) Inventors:
• YU, Kedong
  Shenzhen, Guangdong 518055 (CN)
• ZHONG, Jianfeng
  Shenzhen, Guangdong 518055 (CN)
• WANG, Zhizhong
  Shenzhen, Guangdong 518055 (CN)
• LIU, Hengqi
  Shenzhen, Guangdong 518055 (CN)

(74) Representative: **Brevalex**
**95, rue d'Amsterdam**
**75378 Paris Cedex 8 (FR)**

(54) **IMPROVED WRED-BASED CONGESTION CONTROL METHOD AND DEVICE**

(57)    Disclosed in the present invention is an improved WRED-based congestion control method, the method comprising: determining a dropping probability of a received data packet according to an average packet length; determining whether to transmit the data packet to a queue or to discard the packet according to the determined dropping probability. Disclosed in the present invention are also an improved WRED-based congestion control device and a computer storage medium.

Determining a probability that a received packet will be dropped according to an average packet length ⎯ 301

Judging whether to send the packet to a queue or drop the packet according to the determined probability that the packet will be dropped ⎯ 302

**FIG. 3**

Description

TECHNICAL FIELD

The disclosure relates to the field of network transmission control, and in particular, to an improved-Weighted Random Early Detection (WRED)-based congestion control method and device.

BACKGROUND

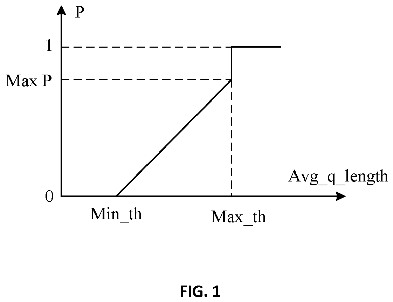

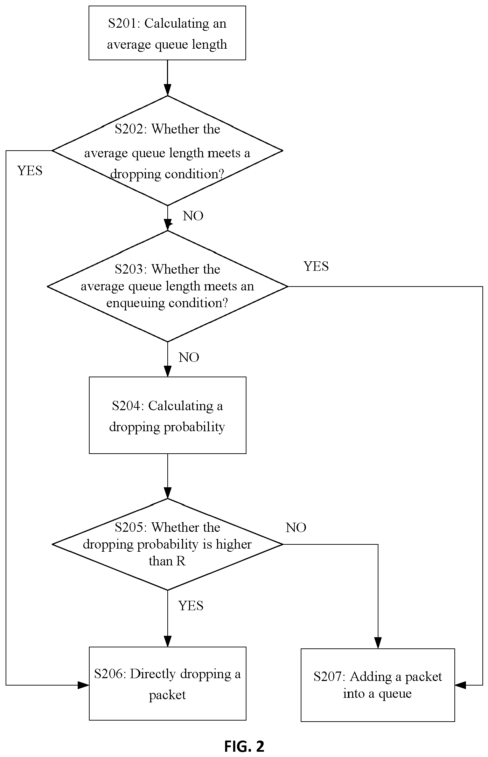

Network congestion easily causes reduction of a Quality of Service (QoS) performance metrics such as a delay and a throughput, and is a key influence factor for a utilization rate of a resource such as a bandwidth and a system cache. Therefore, an effective congestion avoidance mechanism is significant for improvement of router performance.
A WRED algorithm is a common dropping algorithm for an existing congestion avoidance mechanism. A calculation process of the WRED algorithm mainly includes: average queue length calculation, WRED dropping probability calculation and WRED dropping judgment, and a dropping curve is shown in FIG. 1. In FIG. 1, an abscissa axis avg_q_length represents a current average queue length of a queue before the queue is about to drop a data packet, and this parameter reflects a queue length changing trend. An ordinate axis P represents a dropping probability, which reflects a probability that the data packet is dropped. min_th represents a minimum threshold of the average queue length, and max_th represents a maximum threshold of the average queue length. max P represents a maximum dropping probability. Here, values of min_th, max_th and max P may be set according to a requirement. From FIG. 1, it can be seen that the probability that the data packet is dropped continuously rises along with approaching of the average queue length to the maximum threshold max_th. When the average queue length reaches the maximum threshold max_th, the probability that the data packet will be dropped reaches the set maximum dropping probability max P. When the average queue length exceeds the maximum threshold max_th, all other data packets trying to enter the queue are dropped. Therefore, the values of min_th and max_th may be regulated to increase or decrease a packet dropping rate during a practical application. From FIG. 1, it can be seen that the value of max P is directly related to the values of min_th and max_th. That is, the value of max P is determined when the values of min_th and max_th are determined. In practice, the values of min_th and max_th are related to service types of transmitted data packets, such as a telecommunication service, an Internet service and a video transmission service. Different services have different tolerance to packet dropping. The max_th may be set to be relatively small for a service with low packet dropping tolerance, and may be set to be relatively large for a service with high packet dropping tolerance.
As shown in FIG. 2, a processing flow of a WRED algorithm for congestion control mainly includes the following processing steps.
In step S201, an average queue length is calculated.
When a data packet enters a congestion control system, the average queue length is calculated at first. The average queue length may reflect a real queue length for an overall changing trend, and may also smooth traffic burst to prevent determination of an overall traffic condition from being changed by a sudden traffic rate increase or decrease. A calculation formula for the average queue length is Avg=Avg'+Wq(Q_length-Avg'). Avg' represents an average queue length calculated last time. In the WRED algorithm, every time when a data packet is received, it will be judged whether to add the data packet into a queue or drop the data packet. Accordingly, when the data packet is added into the queue, a length of the queue is changed. Therefore, the average queue length reflects a queue length changing trend from reception of a first data packet to reception of a last data packet. When the first data packet is received, a value of Avg' is 0, and a current average queue length is calculated. Then, when a second data packet is received, a current average queue length is determined according to a queue length calculated last time, a current queue length and a weight value Wq, and loop iteration is continuously performed in the same manner. Q_length represents the current queue length, i.e. a current length of the queue when the data packet is received. Wq is a calculation weight. Avg is the current average queue length.
In step S202, it is judged whether the average queue length meets a dropping condition or not.
When the average queue length is more than or equal to a preset maximum threshold max_th of the average length, it is determined that the data packet meets the dropping condition, the process proceeds to step S206 to drop the current data packet. When the data packet does not meets the dropping condition, step S203 is executed for continuous processing.
In step S203, it is judged whether the average queue length meets an enqueuing condition.
That is, whether the current average queue length meets a condition of directly adding the data packet into the data packet queue is judged. When the average queue length is less than a minimum threshold min_th of the average data packet length, it may be determined that the data packet meets the condition of direct addition into the data packet queue, the process proceeds to step S207 to direct enqueue the data packet. When the average queue length does not meet the enqueuing condition, that is, the current average queue length belongs to an interval range of [min_th, max_th], the process proceeds to step S204.

In step S204, a dropping probability is calculated.

The dropping probability P of the data packet is calculated according to a size of the current data packet and the average queue length.

In step S205, it is judged whether the dropping probability is higher than R.

After the dropping probability of the current data packet is determined, the determined probability that the received data packet will be dropped is compared with a random number R, generated by a system, in an interval [0, 1]. When the dropping probability is higher than R, the process proceeds to step S206 to directly drop the data packet. When the dropping probability is less than or equal to R, the process proceeds to step S207 to add the data packet into the queue.

In the solution, there are various WRED dropping probability calculation and dropping-probability-based WRED dropping judgment methods. One of the methods is an equivalent packet size-based calculation method. A basic solution of the equivalent packet length-based calculation method is as follows. A supported packet size range of a data packet is divided into a plurality of intervals. Different equivalent packet sizes are set for each interval. The interval to which a received data packet belongs is searched according to a packet size of the received data packet. An equivalent packet size of the received data packet is determined according to the found interval. The probability that the received data packet will be dropped is calculated according to the following calculation formula:

$$Pb' = \frac{packet\_size}{\max\_packet\_size} \times \frac{(avg\_q\_len - \min th)\max p}{\max th - \min th},$$

where packet_size_new represents the equivalent packet size, max_packet_size represents a supported maximum packet size of the data packet, avg_q_length represents the average queue length, max_th represents a maximum threshold value of the average queue length, min_th represents a minimum threshold value of the average queue length, and max P represents a maximum dropping probability max P of the received data packet.

During the practical application, the solution is relatively complex in packet size segment processing, so that complexity in designing is increased. Moreover, the solution is prominently discrete, data packets within the same packet size range have a fixed dropping probability under the same condition, and the dropping probability of each packet size cannot be smoothly changed according to a practical data packet size changing trend. In addition, a dropping probability of a short packet is excessively low, and advance dropping performance is degraded.

## SUMMARY

In order to solve the existing technical problem, embodiments of the disclosure are intended to provide an improved-WRED-based congestion control method and device.

The embodiments of the disclosure provide an improved-WRED-based congestion control method, which include:

determining a probability that a received data packet will be dropped according to an average packet size; and judging whether to send the data packet to a queue or drop the data packet according to the determined probability that the received data packet will be dropped.

In the solution, the dropping probability $Pb'$ of the received data packet may be determined through the following formula:

$$Pb' = \frac{Avg_{Packet\_Len}}{\max\_packet\_size} \times \frac{(avg\_q\_len - \min th)\max p}{\max th - \min th},$$

where $Avg_{packet\_Len}$ may represent the average packet size, $max\_packet\_size$ may represent a supported maximum packet size of the data packet, $avg\_q\_len$ may represent an average queue length, $\min th$ may represent a minimum threshold value of the average queue length, $\max th$ may represent a maximum threshold value of the average queue length, and $\max p$ may represent a maximum probability that the received data packet will be dropped.

In the solution, the average packet size $Avg_{packet\_Len}$ of the received data packet may be determined through the following formula:

$$\text{Avg}_{\text{Packet\_Len}} = \text{Avg'}_{\text{Packet\_Len}} + \text{Wp}(\text{Packet\_Len} - \text{Avg'}_{\text{Packet\_Len}}),$$

where $Avg_{packet\_Len}$ may be a historical average packet size, $packet\_Len$ may be a packet size of the received data packet, and Wp may be a calculation weight.

In the solution, a value of Wp may be $2^n$, where n may be a negative integer.

In the solution, judging whether to send the data packet to the data packet queue or drop the data packet may comprises:

when $Pb'$<R, determining to drop the data packet; and
when $Pb'$>=R, determining to send the data packet to the queue,
wherein $Pb'$ may be the probability that the data packet will be dropped, and R may be a random number within a range of [0, 1].

The embodiments of the disclosure provide an improved-WRED-based congestion control device, which include: a dropping probability determination module, a judgment module and a data packet processing module, wherein the dropping probability determination module is configured to determine a probability that a received data packet will be dropped according to an average packet size;

the judgment module is configured to judge whether to send the current data packet to a queue or drop the data packet according to the determined probability that the received data packet will be dropped, and after obtaining a result of the judgment, trigger the processing module; and

the data packet processing module is configured to, when being triggered by the judgment module, send the data packet to the queue or drop the data packet according to the result of the judgment.

In the solution, the dropping probability determination module may be configured to determine the probability $Pb'$ that the received data packet will be dropped through the following formula:

$$Pb' = \frac{Avg_{Packet\_Len}}{\max\_packet\_size} \times \frac{(avg\_q\_len - \min th)\max p}{\max th - \min th},$$

where $Avg_{packet\_Len}$ may represent the average packet size, $max\_packet\_size$ may represent a supported maximum packet size of the data packet, $avg\_q\_len$ may represent an average queue length, $\min th$ may represent a minimum threshold value of the average queue length, $\max th$ may represent a maximum threshold value of the average queue length, and $\max p$ may represent a maximum probability that the received data packet will be dropped.

In the solution, the dropping probability determination module may determine the average packet size $Avg_{packet\_Len}$ of the received data packet through the following formula:

$$\text{Avg}_{\text{Packet\_Len}} = \text{Avg'}_{\text{Packet\_Len}} + \text{Wp}(\text{Packet\_Len} - \text{Avg'}_{\text{Packet\_Len}}),$$

where $Avg'_{packet\_Len}$ may be a historical average packet size, $packet\_Len$ may be a current packet size, and Wp may be a calculation weight.

In the solution, a value of Wp may be $2^n$, where n may be a negative integer.

In the solution, the judgment module may judge whether to send the data packet to the data packet queue or drop the data packet in the following manner:

when $Pb'$<R, determining to drop the data packet; and
when $Pb'$>=R, determining to send the data packet to the queue,
wherein $Pb'$ may be the probability that the data packet will be dropped, and R may be a random number within a range of [0, 1].

The embodiments of the disclosure further provide a computer storage medium containing a set of computer-executable instructions for executing the improved-WRED-based congestion control method of the embodiments of the disclosure.

According to the improved-WRED-based congestion control method and device provided by the embodiments of the disclosure, the probability that the received data packet will be dropped is determined according to the average packet size; and whether to send the data packet to the queue or drop the data packet is judged according to the determined probability that the received data packet will be dropped. In such a manner, when the probability that the received data packet will be dropped is determined by adopting the method provided by the embodiments of the disclosure through the average packet size, dropping probabilities of data packets within the same packet size range under the same condition are not fixed, and the dropping probability of each packet size may be smoothly changed according to a practical data packet size changing trend. In this way, the problem of great difference between dropping probabilities of a long packet and a short packet in a conventional art is greatly improved, and it is ensured that the probability that the long packet will be dropped is higher than the probability that the short packet will be dropped. In addition, the method provided by the embodiments of the disclosure is low in designing complexity and convenient to implement.

## BRIEF DESCRIPTION OF DRAWINGS

FIG. 1 is a diagram of a dropping curve of a WRED algorithm according to the conventional art.
FIG. 2 is a processing flowchart of a WRED algorithm for congestion control according to the conventional art.
FIG. 3 is a flowchart of an improved-WRED-based congestion control method according to an embodiment of the disclosure.
FIG. 4 is a diagram of a relationship curve of a packet dropping probability and a weight value in an improved-WRED-based congestion control method according to an embodiment of the disclosure.
FIG. 5 is a basic structure diagram of an improved-WRED-based congestion control device according to an embodiment of the disclosure.

## DETAILED DESCRIPTION

According to an improved-WRED-based congestion control method and device in the embodiments of the disclosure, a probability that a received data packet will be dropped is determined according to an average packet size; and it is judged whether to send the data packet to a queue or drop the data packet according to the determined probability that the received data packet will be dropped.

The disclosure will be further described below in detail by referring to the drawings and specific embodiments.

First embodiment

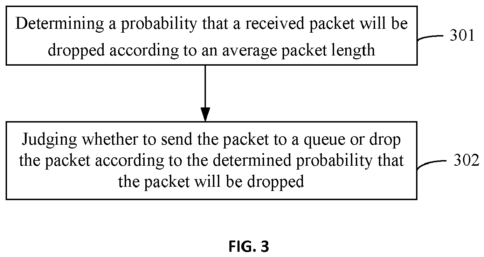

The first embodiment 1 of the disclosure provides an improved-WRED-based congestion control method. As shown in FIG. 3, the method includes the following steps.

In step 301, a probability that a received data packet will be dropped is determined according to an average packet size.

The method provided by the embodiment of the disclosure is mainly applied to network transmission equipment such as a router and a switch.

Determining the probability that the received data packet will be dropped according to the average packet size is implemented as follows.

The probability $Pb'$ that the received data packet will be dropped through the following formula:

$$Pb' = \frac{Avg_{Packet\_Len}}{\max\_packet\_size} \times \frac{(avg\_q\_len - \min th)\max p}{\max th - \min th},$$

where $Avg_{packet\_Len}$ represents the average packet size, $max\_packet\_size$ represents a supported maximum packet size of the data packet, $avg\_q\_len$ represents an average queue length, $\min th$ represents a minimum threshold value of the average queue length, $\max^{th}$ represents a maximum threshold value of the average queue length, and $\max p$ represents a maximum probability that the received data packet will be dropped.

Here, a value interval of $\max p$ is (0%, 100%].

The current average packet size $Avg_{packet\_Len}$ may be determined through the following formula:

$$Avg_{Packet\_Len} = Avg'_{Packet\_Len} + Wp(Packet\_Len - Avg'_{Packet\_Len}),$$

where $Avg'_{packet\_Len}$ is a historical average packet size, this parameter reflects the trend of change in the packet size of the received data packet. Moreover, in a calculation process of the current average packet size, a previous average packet size and a packet size of the currently received data packet will be comprehensively taken into consideration. *packet_Len* is the packet size of the currently received data packet, and Wp is a calculation weight.

When $Avg_{packet\_Len}$ is calculated for the first time, an initial value of $Avg'_{packet\_Len}$ may be set and regulated according to a requirement during a practical application. For example, the initial value of $Avg'_{packet\_Len}$ may be set to be an intermediate value of a packet size range supported by network transmission equipment, or set to be a specific packet size value, or set to be a packet size value of a first data packet received by the network transmission equipment.

During the practical application, a value of Wp may also be adjusted to change a degree of influence of the data packet on the average packet size, thereby regulating a dropping probability difference value between a long packet and a short packet. The value of Wp is usually $2^n$, where n may be any negative integer.

A dropping probability difference between the long packet and the short packet is increased along with increase of the weight value, and is decreased along with decrease of the weight value. That is, when the dropping probability difference between the long packet and the short packet is required to be decreased, the weight value may be decreased; and when the dropping probability difference between the long packet and the short packet is required to be increased, the weight value may be increased.

It is to be noted that the embodiment of the disclosure focuses on application of the average packet size to a data packet dropping probability calculation method. There are various average packet size calculation methods, and only one of the average packet size calculation methods is mentioned here. Any other solution capable of calculating the average packet size may be adopted to determine the average packet size in the practical application.

In step 302, it is judged whether to send the data packet to a queue or drop the data packet according to the determined probability that the received data packet will be dropped.

After the probability that the data packet will be dropped is determined in step 301, whether to send the data packet to the data packet queue is judged in the following manner: when $Pb' \geq R$, determining to send the data packet to the queue.

Whether to drop the data packet is judged in the following manner: when $Pb' < R$, determining to drop the data packet.

$Pb'$ represents the probability that the data packet will be dropped, and R is a random number within a range of [0, 1]. It is to be noted that a value of R is randomly generated every time when whether to drop a data packet or send the data packet to the queue is judged.

A specific implementation process and effect of the disclosure will be described below with an example.

In a WRED algorithm in the conventional art, a calculation formula for a dropping probability is as follows:

$$Pb' = \frac{packet\_size}{\max\_packet\_size} \times \frac{(avg\_q\_len - \min th)\max p}{\max th - \min th},$$

where *packet_size* is a size of a data packet, *max_packet_size* represents a supported maximum packet size of the data packet, *avg_q_len* represents an average queue length, min *th* represents a minimum threshold value of the average queue length, max *th* represents a maximum threshold value of the average queue length, max *p* represents a maximum probability that the received data packet will be dropped, and a value interval of max *p* is (0%, 100%].

From the formula, the dropping probability is very low when a packet size is relatively small, and a function of WRED is degraded to be equivalent to a function of Tail Dropping (TD).

According to the formula, for a data packet with a packet size of 16Bytes, even when max *p* =1 and *avg_q_len* = max *th,* a dropping probability Pb' calculated according to the formula is maximally 0.1% only. When the average queue length *avg_q_len* approaches to the maximum dropping threshold value max *th*, the packet is supposed to be rapidly dropped. However, it is judged according to the dropping probability calculated according to the formula that only one packet may be dropped when 1,000 16Bytes data packets are sent. That is, the data packets are hardly dropped and all enqueued, thereby continuously increasing *avg_q_len,* until all the enqueued data packets are decided to be dropped when *avg_q_len* is larger than max *th.* At this moment, an advance dropping function of the WRED algorithm may not be used, and the WRED algorithm is degraded into a TD algorithm.

For a data packet with a packet size of 16KBytes, a dropping probability Pb' is 100%. That is, packets with the packet size are all dropped. Therefore, the algorithm may cause the condition that dropping probabilities of a long packet and a short packet are greatly different, and is finally degraded into the TD algorithm.

After an average packet size mechanism is introduced in the embodiment of the disclosure, a practical packet size is modified into an average packet size, and the formula is modified into:

$$Pb' = \frac{Avg_{Packet\_Len}}{\max\_ packet\_ size} \times \frac{(avg\_q\_len - \min th)\max p}{\max th - \min th},$$

where $Avg_{Packet\_Len}$ = $Avg'_{Packet\_Len}$ + $Wp(Packet\_Len - Avg'_{Packet\_Len})$.

According to the formula, under the same condition, that is max $p$ =1 and $avg\_q\_len$ = max $th$, it is supposed that an initial value of $Avg'_{packet\_Len}$ is an intermediate value 8KBytes of the packet size, and the value of Wp is $2^{-8}$.

For the data packet with the packet size packet_size of 16Bytes, a newly calculated average packet size is 7.75025KBytes, and a calculated dropping probability is 48.44%, which is much higher than the dropping probability of 0.1% calculated before, so that an advance dropping effect of the WRED algorithm may be achieved.

For the data packet with the packet size packet_size of 16KBytes, a newly calculated average packet size is 8.125KBytes, and a calculated dropping probability is 50.78%, and is lower than the dropping probability of 100% calculated before.

Thus, it can be seen that the improved WRED algorithm of the embodiment of the disclosure achieves the advance dropping effect on all packet sizes, greatly improves the problem that the probability that the long packet will be dropped and the probability that the short packet will be dropped are greatly different and ensures that the probability that the long packet will be dropped is higher than the probability that the short packet will be dropped.

In addition, the value of the weight Wp may also be regulated to change a degree of influence of a new data packet on the average packet size, thereby regulating the difference between the probability that the long packet will be dropped and the probability that the short packet will be dropped.

For example, Wp is increased to be $2^{-1}$, under the same calculation condition, the probability that the data packet with the size of 16Bytes will be dropped is 25.05%, the probability that the data packet with the size of 16KBytes is 75% will be dropped. In such a case, the difference between the probability that the data packet with the size of 16Bytes will be dropped and the probability that the data packet with the size of 16KBytes will be dropped is increased to be 50.0%, which is obviously increased compared with the difference 3.2% between the probability that the long packet will be dropped and the probability that the short packet will be dropped when Wp=$2^{-8}$. Also, Table 2 lists the probability that the long packet will be dropped and the probability that the short packet will be dropped for other weights under the same condition. It is to be noted that Table 2 only makes comparison and description only with the probability that the long packet will be dropped and the probability that the short packet will be dropped under the weight condition that n is ranging from -10 to -1, and other conditions are not listed one by one.

Table 2

| Wp | Probability that 16Bytes packet will be dropped | Probability that 16KBytes packet will be dropped |
|---|---|---|
| $2^{-1}$ | 0.2505 | 0.75 |
| $2^{-2}$ | 0.37525 | 0.625 |
| $2^{-3}$ | 0.437625 | 0.5625 |
| $2^{-4}$ | 0.468813 | 0.53125 |
| $2^{-5}$ | 0.484406 | 0.515625 |
| $2^{-6}$ | 0.492203 | 0.507813 |
| $2^{-7}$ | 0.496102 | 0.503906 |
| $2^{-8}$ | 0.498051 | 0.501953 |
| $2^{-9}$ | 0.499025 | 0.500977 |
| $2^{-10}$ | 0.499513 | 0.500488 |

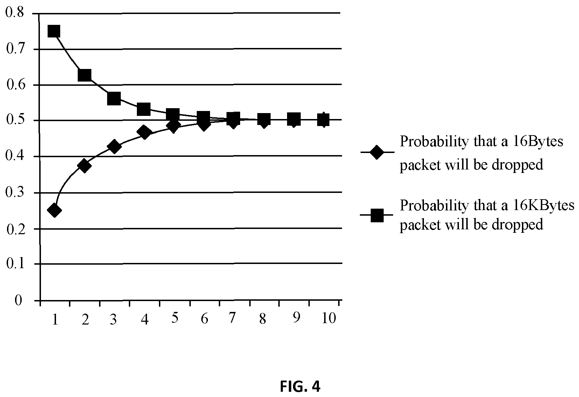

The above data results are drawn into a curve diagram. As shown in FIG. 4, an ordinate axis represents the probability that a packet will be dropped, an abscissa axis represents Wp. The 1 to 10 on the abscissa axis represent $2^{-1}$, $2^{-2}$, $2^{-3}$, $2^{-4}$, ..., $2^{-10}$ respectively. From the figure, it can be clearly seen that the difference between the probability that the long packet will be dropped and the probability that the short packet will be dropped become higher when the weight is increased and the difference between the probability that the long packet will be dropped and the probability that the short packet will be dropped become smaller when the weight is decreased. Meanwhile, it is always ensured that the probability that the long packet will be dropped is higher than the probability that the short packet will be dropped under the same condition.

Thus, it can be seen that the weight Wp may be regulated to achieve a purpose of regulating the difference between the probability that the long packet will be dropped and the probability that the short packet will be dropped become to be well adapted to a user requirement.

Second embodiment

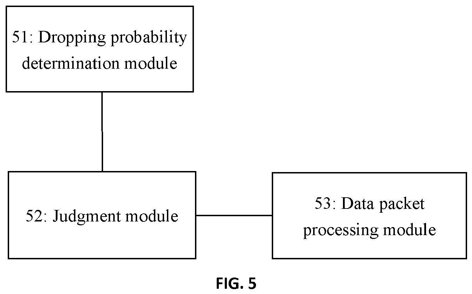

The second embodiment of the disclosure provides an improved-WRED-based congestion control device. As shown in FIG. 5, the device includes: a dropping probability determination module 51, a judgment module 52 and a data packet processing module 53.

The dropping probability determination module 51 is configured to determine a probability that a received data packet will be dropped according to an average packet size.

The judgment module 52 is configured to judge whether to send the data packet to a queue or drop the data packet according to the determined probability that the received data packet will be dropped, and after obtaining a result of the judgment, trigger the processing module 53.

The data packet processing module 53 is configured to, when being triggered by the judgment module 52, send the data packet to the queue or drop the data packet according to the result of the judgment.

Here, the dropping probability determination module 51 is configured to determine the probability $Pb$' that the received data packet will be dropped through the following formula:

$$Pb' = \frac{Avg_{Packet\_Len}}{\max\_packet\_size} \times \frac{(avg\_q\_len - \min th)\max p}{\max th - \min th},$$

where $Avg_{Packet\_Len}$ represents the average packet size, $max\_packet\_size$ represents a supported maximum packet size of the data packet, $avg\_q\_len$ represents an average queue length, min $th$ represents a minimum threshold value of the average queue length, max $th$ represents a maximum threshold value of the average queue length, and max $p$ represents a maximum probability that the received data packet will be dropped.

The dropping probability determination module 51 determines the average packet size $Avg_{packet\_Len}$ through the following formula:

$$Avg_{Packet\_Len} = Avg'_{Packet\_Len} + Wp(Packet\_Len - Avg'_{Packet\_Len}),$$

where $Avg'_{packet\_Len}$ is a historical average packet size, $packet\_Len$ is a current packet size, and Wp is a calculation weight.

Here, a value of Wp is $2^n$, where n may be any negative integer. The difference between the probability that the long packet will be dropped and the probability that the short packet will be dropped is increased along with increase of the weight value, and is decreased along with decrease of the weight value. That is, when the difference between the probability that the long packet will be dropped and the probability that the short packet will be dropped is required to be decreased, the weight value may be decreased; and when the difference between the probability that the long packet will be dropped and the probability that the short packet will be dropped is required to be increased, the weight value may be increased.

The judgment module 52 judges whether to send the data packet to the data packet queue or drop the data packet in the following manner: when $Pb$'<R, determining to drop the data packet; and when $Pb$'>=R, determining to send the data packet to the queue.

Here, $Pb$' represents the probability that the data packet will be dropped, and R is a random number within a range of [0, 1].

In a specific implementation process, the dropping probability determination module 51, the judgment module 52 and the data packet processing module 53 may be implemented by a Central Processing Unit (CPU), Micro Processing Unit (MPU), Digital Signal Processor (DSP) or Field-Programmable Gate Array (FPGA) in network transmission equipment.

The embodiments of the disclosure further provide a computer storage medium containing a set of computer-executable instructions for executing the improved-WRED-based congestion control method of the embodiments of the disclosure.

Those skilled in the art should know that the embodiment of the disclosure may be provided as a method, a system or a computer program product. Therefore, the disclosure may adopt a form of hardware embodiment, software embodiment and combined software and hardware embodiment. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, equipment (system) and computer program product according to the embodiment of the disclosure. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiment of the disclosure and not intended to limit the scope of protection of the disclosure.

## Claims

1. An improved-Weighted Random Early Detection, WRED-based congestion control method, comprising:

   determining a probability that a received data packet will be dropped according to an average packet size; and judging whether to send the data packet to a queue or drop the data packet according to the determined probability that the received data packet will be dropped.

2. The method according to claim 1, wherein the probability $Pb'$ that the received data packet will be dropped is determined through the following formula:

$$Pb' = \frac{Avg_{Packet\_Len}}{\max\_packet\_size} \times \frac{(avg\_q\_len - \min th)\max p}{\max th - \min th},$$

   where $Avg_{packet\_Len}$ represents the average packet size, $max\_packet\_size$ represents a supported maximum packet size of the data packet, $avg\_q\_len$ represents an average queue length, $\min th$ represents a minimum threshold value of the average queue length, $\max th$ represents a maximum threshold value of the average queue length, and $\max p$ represents a maximum probability that the received data packet will be dropped.

3. The method according to claim 1 or 2, wherein the average packet size $Avgp_{acket\_Len}$ of the received data packet is determined through the following formula:

$$Avg_{Packet\_Len} = Avg'_{Packet\_Len} + Wp(Packet\_Len - Avg'_{Packet\_Len}),$$

   where $Avg'_{packet\_Len}$ is a historical average packet size, $packet\_Len$ is a packet size of the received data packet, and Wp is a calculation weight.

4. The method according to claim 3, wherein a value of Wp is $2^n$, where n is a negative integer.

5. The method according to claim 1, wherein judging whether to send the data packet to the data packet queue or drop the data packet comprises:

when $Pb'$<R, determining to drop the data packet; and
when $Pb'$>=R, determining to send the data packet to the queue,
wherein $Pb'$ is the probability that the data packet will be dropped, and R is a random number within a range of [0, 1].

6. An improved-Weighted Random Early Detection, WRED-based congestion control device, comprising a dropping probability determination module, a judgment module and a data packet processing module, wherein

the dropping probability determination module is configured to determine a probability that a received data packet will be dropped according to an average packet size;
the judgment module is configured to judge whether to send the current data packet to a queue or drop the data packet according to the determined probability that the received data packet will be dropped, and after obtaining a result of the judgment, trigger the processing module; and
the data packet processing module is configured to, when being triggered by the judgment module, send the data packet to the queue or drop the data packet according to the result of the judgment.

7. The device according to claim 6, wherein the dropping probability determination module is configured to determine the probability $Pb'$ that the received data packet will be dropped through the following formula:

$$Pb' = \frac{Avg_{Packet\_Len}}{\max\_packet\_size} \times \frac{(avg\_q\_len - \min th)\max p}{\max th - \min th} \,,$$

where $Avg_{packet\_Len}$ represents the average packet size, $max\_packet\_size$ represents a supported maximum packet size of the data packet, $avg\_q\_len$ represents an average queue length, $\min th$ represents a minimum threshold value of the average queue length, $\max th$ represents a maximum threshold value of the average queue length, and $\max p$ represents a maximum probability that the received data packet will be dropped.

8. The device according to claim 6 or 7, wherein the dropping probability determination module determines the average packet size $Avgp_{acket\_Len}$ of the received data packet through the following formula:

$$Avg_{Packet\_Len} = Avg'_{Packet\_Len} + Wp(Packet\_Len - Avg'_{Packet\_Len}) \,,$$

where $Avg'_{packet\_Len}$ is a historical average packet size, $packet\_Len$ is a a current packet size, and Wp is a calculation weight.

9. The device according to claim 8, wherein a value of Wp is $2^n$, where n is a negative integer.

10. The device according to claim 6, wherein the judgment module judges whether to send the data packet to the data packet queue or drop the data packet in the following manner:

when $Pb'$<R, determining to drop the data packet; and
when $Pb'$>=R, determining to send the data packet to the queue,
wherein $Pb'$ represents the probability that the data packet will be dropped, and R is a random number within a range of [0, 1].

11. A computer storage medium containing a set of computer-executable instructions for executing the improved-Weighted Random Early Detection, WRED-based congestion control method according to any one of claims 1-5.

**FIG. 1**

S201: Calculating an average queue length

S202: Whether the average queue length meets a dropping condition?

YES

NO

S203: Whether the average queue length meets an enqueuing condition?

YES

NO

S204: Calculating a dropping probability

S205: Whether the dropping probability is higher than R

NO

YES

S206: Directly dropping a packet

S207: Adding a packet into a queue

**FIG. 2**

Determining a probability that a received packet will be dropped according to an average packet length — 301

Judging whether to send the packet to a queue or drop the packet according to the determined probability that the packet will be dropped — 302

FIG. 3

**FIG. 4**

Legend:
- Probability that a 16Bytes packet will be dropped
- Probability that a 16KBytes packet will be dropped

51: Dropping probability determination module

52: Judgment module

53: Data packet processing module

**FIG. 5**

# INTERNATIONAL SEARCH REPORT

International application No.

**PCT/CN2015/074835**

**A.  CLASSIFICATION OF SUBJECT MATTER**

H04L 12/823 (2013.01) i; H04L 12/863 (2013.01) i

According to International Patent Classification (IPC) or to both national classification and IPC

**B.  FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS, CNTXT, CNKI, VEN: weighted random early detection, congestion, packet length, packet, size, length, wred, traffic, average, discard

**C.  DOCUMENTS CONSIDERED TO BE RELEVANT**

| Category* | Citation of document, with indication, where appropriate, of the relevant passages | Relevant to claim No. |
|---|---|---|
| X | CHEN, Gang; HONG, Peilin; LI, Jinsheng; "Congestion Control Algorithms for Internet Routers", MODERN SCIENCE & TECHNOLOGY OF TELECOMMUNICATIONS, vol. /, no. 7, 31 July 2000 (31.07.2000), part 3, section 2 | 1-11 |
| A | US 2013163418 A1 (LEE, W.K. et al.), 27 June 2013 (27.06.2013), the whole document | 1-11 |
| A | CN 102629910 A (ZTE CORP.), 08 August 2012 (08.08.2012), the whole document | 1-11 |
| A | CN 102833159 A (ZTE CORP.), 19 December 2012 (19.12.2012), the whole document | 1-11 |

☐ Further documents are listed in the continuation of Box C.          ☒ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 28 August 2015 (28.08.2015) | **08 September 2015 (08.09.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Yan** Telephone No.: (86-10) **62088422** |

Form PCT/ISA/210 (second sheet) (July 2009)

## INTERNATIONAL SEARCH REPORT
Information on patent family members

International application No.

**PCT/CN2015/074835**

| Patent Documents referred in the Report | Publication Date | Patent Family | Publication Date |
|---|---|---|---|
| US 2013163418 A1 | 27 June 2013 | KR 20130093702 A | 23 August 2013 |
| CN 102629910 A | 08 August 2012 | None | |
| CN 102833159 A | 19 December 2012 | EP 2887591 A1 | 24 June 2015 |
| | | WO 2014026554 A1 | 20 February 2014 |

Form PCT/ISA/210 (patent family annex) (July 2009)